# EUROPÄISCHE PATENTSCHRIFT

(11) **EP 1 820 729 B1**
(45) Veröffentlichungstag und Bekanntmachung des Hinweises auf die Patenterteilung: **01.09.2010**
(21) Anmeldenummer: 06026532.9
(22) Anmeldetag: 21.12.2006
(51) Int. Cl.: B64D 11/06, B60N 2/68

(54) **Flugzeugsitzbefestigungsvorrichtung**
Aeroplane seat fastening device
Dispositif de fixation de siège d'avion

(30) Priorität: 21.02.2006 DE 102006007977
(43) Veröffentlichungstag der Anmeldung: 22.08.2007
(73) Patentinhaber: Recaro Aircraft Seating GmbH & Co. KG, 74523 Schwäbisch Hall (DE)
(72) Erfinder: Staab, Franz, 88682 Salem (DE); Mai, Helmut, 40591 Düsseldorf (DE)
(74) Vertreter: Daub, Thomas

(56) Entgegenhaltungen:
- DE-U1- 20 004 570
- US-A- 4 712 696
- US-A- 5 443 239
- US-A1- 2001 000 639
- US-A1- 2001 040 203
- US-B1- 6 199 252
- US-B1- 6 227 489

## Beschreibung

### Stand der Technik

Die Erfindung geht aus von einer Flugzeugsitzbefestigungsvorrichtung nach dem Oberbegriff des Anspruchs 1, solche Flugzeugsitzbefestigungsvorrichtung ist z.B aus der US-A-6 227 489.

Es sind bereits Flugzeugsitzbefestigungsvorrichtungen bekannt, die zur Befestigung einer Schalenhälfte an einer Konsole vorgesehen sind. Dabei ist an die Konsole zumeist eine Platte angebracht, die mit Bohrungen versehen ist. In die Schalenhälften sind Stifte eingeklebt, die zur Befestigung der Schalenhälfte an der Konsole in die Bohrungen eingeführt werden.

Der Erfindung liegt insbesondere die Aufgabe zugrunde, eine Flugzeugsitzbefestigungsvorrichtung bereitzustellen, die eine einfache und schnelle Montage ermöglicht. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Flugzeugsitzbefestigungsvorrichtung mit wenigstens einem Einführbereich und wenigstens einem Halteelement, die zur Befestigung einer Schalenhälfte an einer Konsole vorgesehen sind.

Es wird vorgeschlagen, dass der Einführbereich eine Ausnehmung umfasst, die dazu vorgesehen ist, ein Einführen des Halteelements in den Einführbereich mit einer Einführbewegung zu ermöglichen, die eine Komponente senkrecht zu einer Haupterstreckungsrichtung des Halteelements aufweist. Dabei soll unter einer Haupterstreckungsrichtung des Halteelements insbesondere die Länge des vorzugsweise als Fortsatz, wie beispielsweise als Stift oder Bolzen, ausgebildeten Halteelements verstanden werden. Hierdurch kann eine konstruktiv einfache und Zeit sparende Montage der Schalenhälfte an der Konsole erreicht werden und ein schräges Einführen der Schalenhälfte in die Konsole und/oder eine nachträgliche Verschraubung von der Schalenhälfte mit der Konsole können vermieden werden. Der Einführbereich mit der Ausnehmung bzw. das Halteelement kann dabei sowohl an der Schalenhälfte als auch an der Konsole angeordnet sein.

Besonders vorteilhaft ist es jedoch, wenn die Schalenhälfte den Einführbereich mit der Ausnehmung und die Konsole das Halteelement umfasst, wodurch die Ausnehmungen an den Einführbereichen der Schalenhälfte möglichst klein gehalten werden können und folglich eine besonders Platz sparende Konstruktion der Flugzeugsitzbefestigungsvorrichtung erreicht werden kann.

Ferner wird vorgeschlagen, dass die Ausnehmung von einem Langloch mit Haupterstreckungsrichtungen in zumindest zwei unterschiedliche Dimensionen gebildet ist, wodurch ein besonders einfaches und schnelles Einführen des Halteelements in die Ausnehmung des Einführbereichs erreicht und eine vorteilhaft formschlüssige Sicherung des Halteelements in zumindest eine der Dimensionen einfach erzielt werden kann, und zwar vorzugsweise in der Art eines Bajonettverschlusses. Besonders vorteilhaft kann dies erreicht werden, wenn das Langloch mit Haupterstreckungsrichtungen in drei unterschiedliche Dimensionen versehen ist und somit das Einführen der Schalenhälfte besonders Platz sparend ausgeführt werden kann. Dabei soll unter einer "Haupterstreckungsrichtung" insbesondere eine Längsrichtung des Langlochs verstanden werden.

Des Weiteren ist von Vorteil, wenn der Einführbereich mit der Ausnehmung von einem laschenartigen, über die Schalenhälfte überstehenden Teilbereich gebildet ist. Hierbei kann eine besonders exakte und einfache Montage der Schalenhälfte, insbesondere in Bereichen mit wenig Montageplatz, an die Konsole erreicht werden und es kann zudem eine erhöhte Stabilität der Einführbereiche mittels des laschenartigen Teilbereichs erreicht werden. In besonders vorteilhafter Weise kann dies durch einen nach oben überstehenden laschenartigen Teilbereich erreicht werden. In diesem Zusammenhang soll unter "oben" die Richtung verstanden werden, die in der normalen Betriebsposition eines Flugzeugs entgegen der Gewichtskraft gerichtet ist.

In einer weiteren Ausgestaltung der Erfindung wird vorgeschlagen, dass wenigstens ein Einführbereich ein Führungselement aufweist, wodurch das Einführen des Halteelements in den Einführbereich erleichtert werden kann, insbesondere bei einem Halteelement, das bei der Montage der Schalenhälfte durch diese für einen Monteur verdeckt ist. In diesem Zusammenhang soll unter einem "Führungselement" ein Element verstanden werden, das das Einführen, insbesondere das Einführen eines Halteelements, in einen Einführbereich aufgrund von Bewegungseinschränkungen, insbesondere durch Führen entlang einer vorgegebenen Führungsbahn, erleichtert. Besonders vorteilhaft ist das Führungselement durch eine sich nach oben verjüngende Ausnehmung gebildet, womit der Einführbereich im unteren Bereich der sich nach oben verjüngenden Ausnehmung für das Halteelement vergrößert werden kann. Grundsätzlich sind jedoch auch weitere, dem Fachmann als sinnvoll erscheinende Führungselemente denkbar.

Vorteilhafterweise umfasst die Flugzeugsitzbefestigungsvorrichtung zumindest ein Rastelement zum Einrasten des Halteelements, wodurch eine besonders stabile Verbindung und Sicherung zwischen Halteelement und Rastelement erreicht werden kann. Besonders vorteilhaft ist das Rastelement innerhalb des Langlochs angeordnet, insbesondere einstückig mit einer Umrandung des Langlochs ausgebildet, wodurch weitere Bauteile, Bauraum, Montageaufwand und Kosten eingespart werden können. Die Schalenhälfte kann hierdurch besonders stabil und sicher an die Konsole angebracht werden. Ein unerwünschtes selbstständiges Lösen der Schalenhälfte durch Vibrationen und weitere Bewegungen der Konsole und/oder der Schalenhälfte kann durch das Einrasten des Halteelements vermieden werden. Alternativ und/oder zusätzlich hierzu kann eine Sicherung auch über weitere bereits vorhandene Bauteile kostengünstig erreicht werden, indem beispielsweise der Einführbereich der Schalenhälfte über ein drehbares, von einem Haltestift gebildetes Halteelement an der Konsole festgehalten werden kann.

Des Weiteren ist von Vorteil, wenn die Flugzeugsitzbefestigungsvorrichtung eine Ausnehmung umfasst, die dazu vorgesehen ist, eine Sicherung des Halteelements in der Ausnehmung mittels einer auf die Schalenhälfte wirkenden Gewichtskraft zu ermöglichen, wodurch eine besonders einfache und kostengünstige Sicherung der Schalenhälfte an der Konsole erreicht werden kann.

In einer weiteren Ausgestaltung der Erfindung wird vorgeschlagen, dass an der Schalenhälfte zumindest eine Leiste angebracht ist, die eine Ausnehmung umfasst, wodurch eine konstruktiv einfache Verstärkung und eine damit verbundene Stabilität des den Einführbereich umfassenden Randbereichs der Schalenhälfte erreicht werden kann. Die Leiste kann dabei mit der Schalenhälfte durch Verschweißen, Vernieten und/oder auf eine weitere, dem Fachmann als sinnvoll erscheinende Weise verbunden sein. Zudem kann die Leiste mit der Schalenhälfte auch einstückig ausgebildet sein, beispielsweise indem diese durch einen Stanz-Biegeprozess mit an die Schalenhälfte angeformt ist.

Vorteilhafterweise umfasst die Leiste wenigstens zwei Ausnehmungen und die Konsole wenigstens zwei Halteelemente, wodurch vor allem eine stabile Ausrichtung der Schalenhälfte an der Konsole und eine tragfähige Einheit zwischen der Schalenhälfte und der Konsole erreicht werden können.

Ferner wird vorgeschlagen, dass wenigstens ein Einführbereich mehrlagig ausgeführt ist, wodurch die Stabilität des Einführbereichs und damit auch dessen Haltefunktion erhöht werden kann. Dabei kann sowohl die Leiste als auch die Schalenhälfte im Einführbereich mehrlagig ausgebildet sein und/oder die Leiste und die Schalenhälfte zusammen können einen mehrlagigen Einführbereich bilden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teilschnitt eines Flugzeugsitzes mit einer erfindungsgemäße Vorrichtung in einer schematischen Darstellung,
- Fig. 2: einen Teilschnitt der in Fig. 1 dargestellten Vorrichtung,
- Fig. 3: einen schematisch dargestellten Flugzeugsitz in einer Seitenansicht,
- Fig. 4: einen schematischen Teilschnitt eines Flugzeugsitzes aus Fig. 3 mit erfindungsgemäßer Vorrichtung und
- Fig. 5: einen schematischen Teilschnitt eines Flugzeugsitzes aus Fig. 3 mit erfindungsgemäßer Vorrichtung.

### Beschreibung des Ausführungsbeispiels

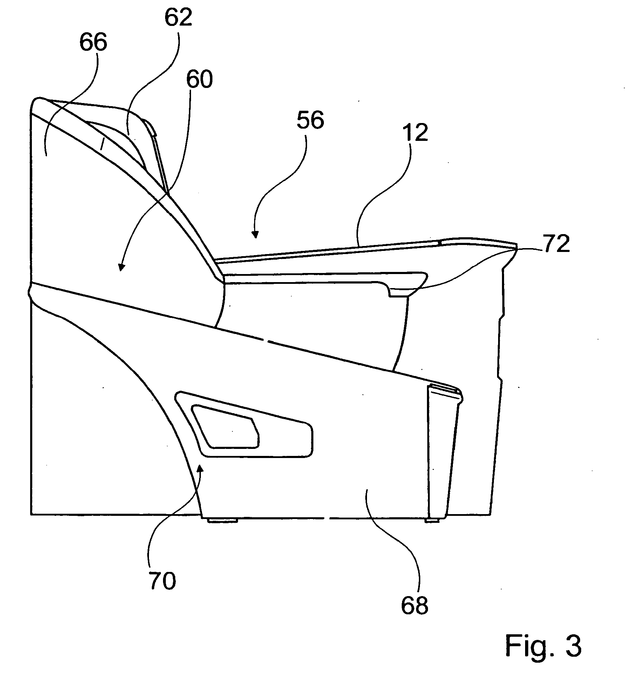

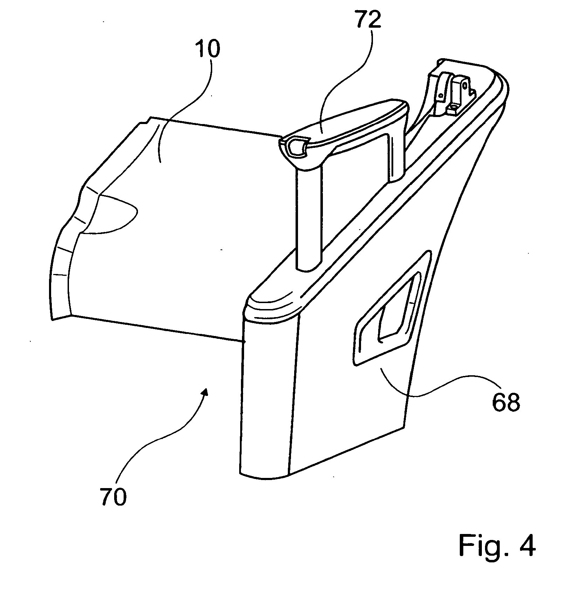

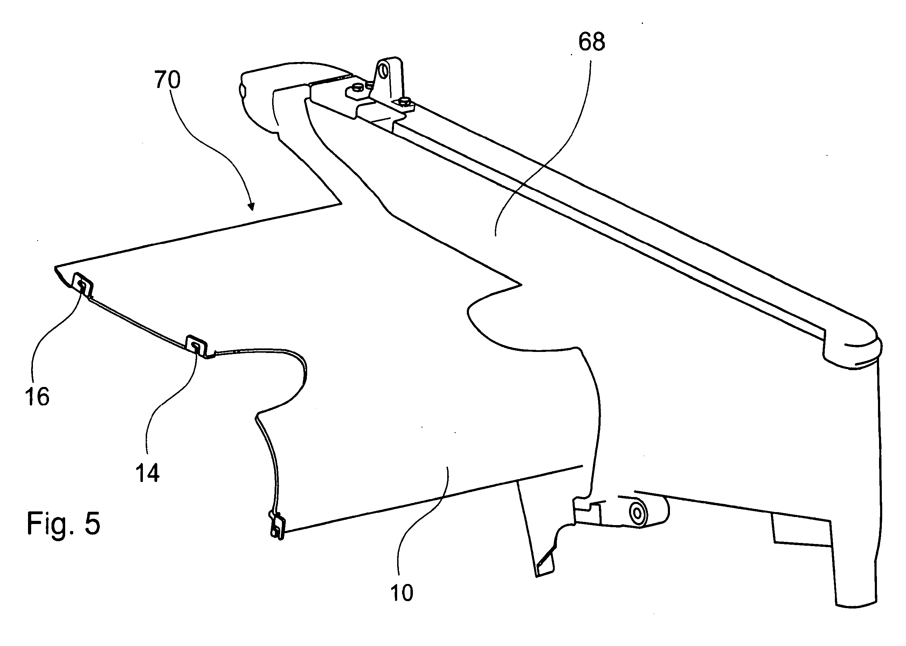

In Figur 3 ist eine Flugzeugsitzvorrichtung 56 mit einer Flugzeugsitzumhausung 60 dargestellt, die untere Schalenhälften 10 und obere Schalenhälften 66 umfasst. Eine innerhalb der Flugzeugsitzvorrichtung 56 angeordnete Schaleneinheit 70 umfasst die untere Schalenhälfte 10 zusammen mit einem Seitenteil 68, an das eine Armlehne 72 angebracht ist (Figuren 4 und 5). Eine Konsole 12 ist mittig, senkrecht zu einer hier nicht näher dargestellten Bodenfläche eines Flugzeugs in der Flugzeugsitzvorrichtung 56 angeordnet, so dass von beiden Seiten eine untere Schalenhälfte 10 an die Konsole 12 angebracht werden kann. Die Konsole 12, die oberen Schalenhälften 66 und die Schaleneinheiten 70 der Flugzeugsitzvorrichtung 56 bilden dabei eine feste Halteschale, in der zwei verstellbare Flugzeugsitze 62 angeordnet sind (Figur 3). Die Schalenhälfte 10 hat dabei die Funktion, eine Mechanik der Flugzeugsitzvorrichtung 56 abzuschirmen, um einen hinter der Flugzeugsitzvorrichtung 56 sitzenden Flugzeugpassagier vor derselben zu schützen (Figuren 4 und 5).

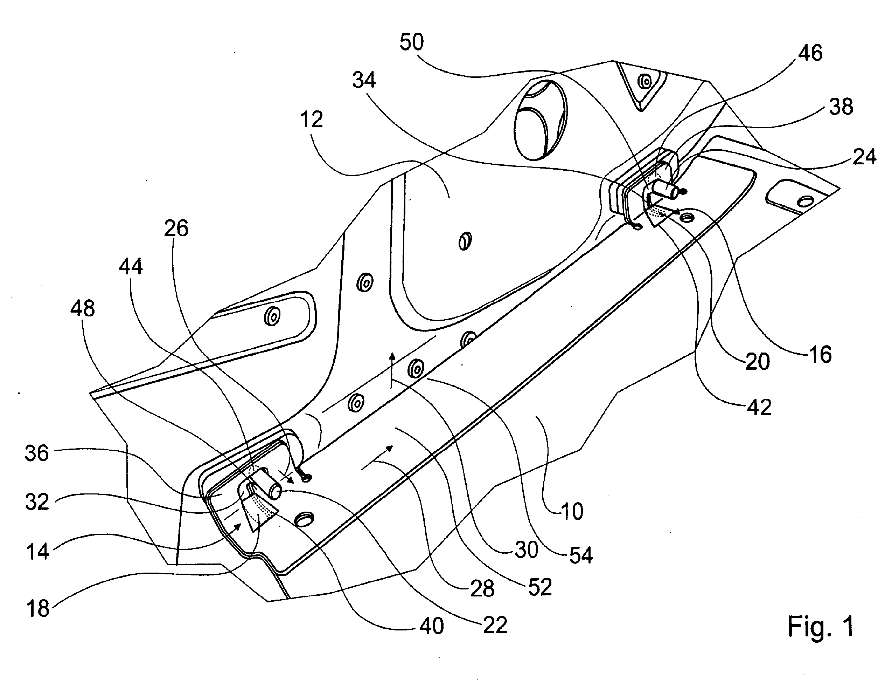

In Figur 1 ist eine Flugzeugsitzbefestigungsvorrichtung dargestellt, die die untere Schalenhälfte 10 und die Konsole 12 umfasst. Zur Befestigung der unteren Schalenhälfte 10 an der Konsole 12 ist die Konsole 12 mit zwei bolzenartigen Halteelementen 22, 24 versehen, die an diese angenietet sind. Die untere Schalenhälfte 10 ist an einem der Konsole 12 zugewandeten Randbereich 54 mit einer Leiste 52 versehen, die an diese angeschweißt ist. Die Leiste 52 hat im Wesentlichen eine rechteckige Form und dient zur Verstärkung des Randbereichs 54 der unteren Schalenhälfte 10.

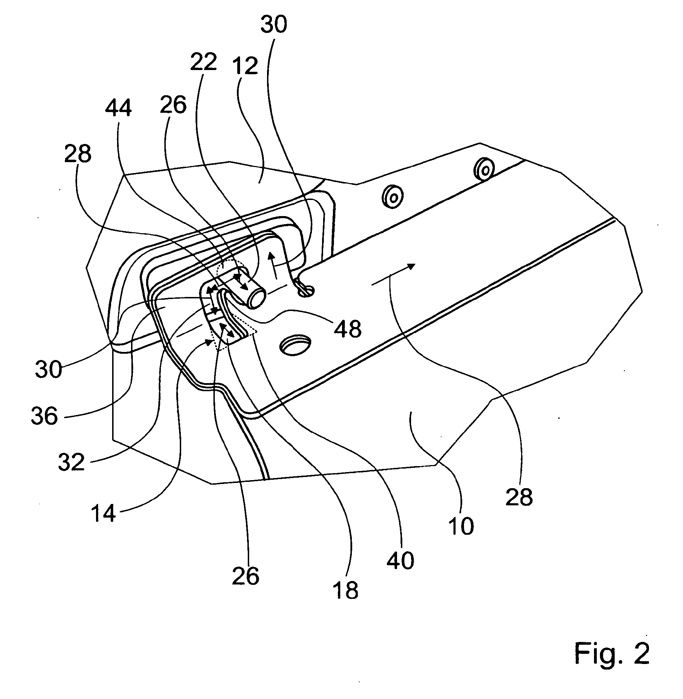

Der Randbereich 54 der unteren Schalenhälfte 10 und der Leiste 52 ist mit zwei Einführbereichen 14, 16 versehen. Für eine zusätzliche Stabilität der unteren Schalenhälfte 10 sind der Randbereich 54 und die Einführbereiche 14, 16 durch die Leiste 52 und die untere Schalenhälfte 10 zweilagig ausgebildet (Figuren 1 und 2). Die Einführbereiche 14, 16 umfassen jeweils einen laschenartigen Teilbereich 36, 38, der über eine Erstreckung der unteren Schalenhälfte 10 hinausragt. Diese Teilbereiche 36, 38 haben in den Figuren 1 und 2 eine zur Erstreckung der unteren Schalenhälfte 10 senkrechte, nach oben gerichtete Haupterstreckungsrichtung 28. Die Einführbereiche 14, 16 sind jeweils mit einer Ausnehmung 18, 20 versehen. Die Ausnehmungen 18, 20 werden jeweils von einem dreidimensionalen Langloch 32, 34 gebildet. Die Langlöcher 32, 34 der Einführbereiche 14, 16 haben dabei eine Haupterstreckungsrichtung 26 in einer von der unteren Schalenhälfte 10 aufgespannten Ebene, die senkrecht zu einer Haupterstreckungsrichtung 28 der Leiste 52 ist. Zudem haben die Langlöcher 32, 34 zwei weitere Haupterstreckungsrichtungen 28, 30 innerhalb der nach oben, senkrecht zur unteren Schalenhälfte 10 ausgerichteten Teilbereiche 36, 38, wobei die Haupterstreckungsrichtungen 28, 30 der Langlöcher 32, 34 dabei senkrecht und parallel zur Haupterstreckungsrichtung 28 der Leiste 52 ausgebildet sind.

Die untere Schalenhälfte 10 mit den nach oben ausgerichteten Teilbereichen 36, 38 wird bei der Montage an die Konsole 12 von oben an die Konsole 12 herangeführt, wodurch die Halteelemente 22, 24 senkrecht zu ihrer Haupterstreckungsrichtung 26 in die Langlöcher 32, 34 eingeführt werden. Um das Einführen der Halteelemente 22, 24 in die Langlöcher 32, 34 zu vereinfachen, ist die Flugzeugsitzbefestigungsvorrichtung an den Einführbereichen 14, 16 mit jeweils einem Führungselement 40, 42 versehen, so dass selbst bei verdeckter Sicht auf die Halteelemente 22, 24 ein einfaches Einführen ermöglicht wird. Die Führungselemente 40, 42 werden im Bereich der Langlöcher 32, 34 durch sich nach oben verjüngende Ausnehmungen gebildet (Figuren 1 und 2).

Zur Sicherung der unteren Schalenhälfte 10 an der Konsole 12 verfügen die von Langlöchern 32, 34 gebildeten Ausnehmungen 18, 20 über Rastelemente 48, 50. Die Rastelemente 48, 50 werden von einer verengten Ausnehmung innerhalb der Langlöcher 32, 34 gebildet, wobei die Bereiche der Langlöcher 32, 34 vor und hinter den Rastelementen 48, 50 einer Querschnittsfläche der Halteelemente 22, 24 angepasst sind, die ein nahezu reibungsfreies Führen der Halteelemente 22, 24 ermöglichen. Im Bereich der Rastelemente 48, 50 weisen die Langlöcher 32, 34 senkrecht zu ihrer Haupterstreckungsrichtung 28 eine Erstreckung auf, die kleiner ist als ein Durchmesser der Halteelemente 22, 24, so dass die Halteelemente 22, 24 die verengten Ausnehmungen nur durch Aufbringen von äußeren Kräften durchqueren können, beispielsweise durch Krafteinwirkung von einem Fachmann bei der Montage der unteren Schalenhälfte 10, und dadurch eine Haltesicherheit der unteren Schalenhälfte 10 an der Konsole 12 erzielt wird. Alternativ und/oder zusätzlich zu in den Langlöchern 32, 34 befindlichen Rastelementen 48, 50 können die Langlöcher 32, 34 auch jeweils mit einer weiteren Ausnehmung 44, 46 versehen sein, die eine Sicherung der unteren Schalenhälfte 10 an der Konsole 12 unter Ausnutzung einer auf die untere Schalenhälfte 10 wirkenden Gewichtskraft ermöglicht. Diese Ausnehmungen 44, 46 erstrecken sich aufgrund der nach oben ausgerichteten Teilbereiche 36, 38 der Einführbereiche 14, 16 ebenfalls nach oben und sind in den Figuren 1 und 2 gestrichelt dargestellt. Die nach oben gerichteten Ausnehmungen 44, 46 sind der auf die untere Schalenhälfte 10 wirkenden Gewichtskraft entgegengerichtet, wodurch deren Ränder ein Lösen der Halteelemente 22, 24 innerhalb der Einführbereiche 14, 16 der unteren Schalenhälfte 10 verhindern.

### Bezugszeichen

- 10: Schalenhälfte
- 12: Konsole
- 14: Einführbereich
- 16: Einführbereich
- 18: Ausnehmung
- 20: Ausnehmung
- 22: Halteelement
- 24: Halteelement
- 26: Haupterstreckungsrichtung
- 28: Haupterstreckungsrichtung
- 30: Haupterstreckungsrichtung
- 32: Langloch
- 34: Langloch
- 36: Teilbereich
- 38: Teilbereich
- 40: Führungselement
- 42: Führungselement
- 44: Ausnehmung
- 46: Ausnehmung
- 48: Rastelement
- 50: Rastelement
- 52: Leiste
- 54: Randbereich
- 56: Flugzeugsitzvorrichtung
- 60: Flugzeugsitzumhausung
- 62: Flugzeugsitz
- 66: obere Schalenhälfte
- 68: Seitenteil
- 70: Schaleneinheit
- 72: Armlehne

## Patentansprüche

1. Flugzeugsitz-konsole und - schalenhälfte mit einer Befestigungsvorrichtung mit wenigstens einem Einführbereich (14, 16) und wenigstens einem Halteelement (22, 24), die zur Befestigung der Schalenhälfte (10) an der Konsole (12) vorgesehen sind,
**dadurch gekennzeichnet,**
**dass** der Einführbereich (14, 16) eine Ausnehmung (18, 20) umfasst, die dazu vorgesehen ist, ein Einführen des Halteelements (22, 24) in den Einführbereich (14, 16) mit einer Einführbewegung zu ermöglichen, die eine Komponente senkrecht zu einer Haupterstreckungsrichtung (26) des Halteelements (22, 24) aufweist, wobei die Schalenhälfte (10) den Einführbereich (14, 16) mit der Ausnehmung (18, 20) und die Konsole (12) das Halteelement (22, 24) umfasst, der Einführbereich (14, 16) mit der Ausnehmung (18, 20) von einem laschenartigen, über die Schalenhälfte (10) überstehenden Teilbereich (36, 38) gebildet ist und die Ausnehmung (18, 20) von einem Langloch (32, 34) mit Haupterstreckungsrichtungen (26, 28, 30) in zumindest zwei unterschiedliche Dimensionen gebildet ist.

2. Flugzeugsitz-konsole und - schalenhälfte mit einer Befestigungsvorrichtung nach Anspruch 1,
**dadurch gekennzeichnet,**
**dass** das Langloch (32, 34) mit Haupterstreckungsrichtungen (26, 28, 30) in drei unterschiedliche Dimensionen versehen ist.

3. Flugzeugsitz-konsole und - schalenhälfte mit einer Befestigungsvorrichtung nach Anspruch 1 oder 2,
**dadurch gekennzeichnet,**
**dass** der laschenartige Teilbereich (36, 38) nach oben überstehend ist.

4. Flugzeugsitz-konsole und - schalenhälfte mit einer Befestigungsvorrichtung nach einem der vorhergehenden Ansprüche,
**dadurch gekennzeichnet,**
**dass** wenigstens ein Einführbereich (14, 16) ein Führungselement (40, 42) aufweist.

5. Flugzeugsitz-konsole und - schalenhälfte mit einer Befestigungsvorrichtung nach Anspruch 4,
**dadurch gekennzeichnet,**
**dass** das Führungselement (40, 42) durch eine sich nach oben verjüngende Ausnehmung gebildet ist.

6. Flugzeugsitz-konsole und - schalenhälfte mit einer Befestigungsvorrichtung nach einem der vorhergehenden Ansprüche,
**gekennzeichnet durch**
zumindest ein Rastelement (48, 50) zum Einrasten des Halteelements (22, 24).

7. Flugzeugsitz-konsole und - schalenhälfte mit einer Befestigungsvorrichtung nach einem der vorhergehenden Ansprüche,
**gekennzeichnet durch**
eine Ausnehmung (44, 46), die dazu vorgesehen ist, eine Sicherung des Halteelements (22, 24) in der Ausnehmung (44, 46) mittels einer auf die Schalenhälfte (10) wirkenden Gewichtskraft zu ermöglichen.

8. Flugzeugsitz-konsole und - schalenhälfte mit einer Befestigungsvorrichtung nach einem der vorhergehenden Ansprüche,
**dadurch gekennzeichnet,**
**dass** an der Schalenhälfte (10) zumindest eine Leiste (52) angebracht ist, die eine Ausnehmung (18, 20) umfasst.

9. Flugzeugsitz-konsole und - schalenhälfte mit einer Befestigungsvorrichtung nach Anspruch 8,
**dadurch gekennzeichnet,**
**dass** die Leiste (52) wenigstens zwei Ausnehmungen (18, 20) und die Konsole (12) wenigstens zwei Halteelemente (22, 24) umfasst.

10. Flugzeugsitz-konsole und - schalenhälfte mit einer Befestigungsvorrichtung nach einem der vorhergehenden Ansprüche,
**dadurch gekennzeichnet,**
**dass** wenigstens ein Einführbereich (14, 16) mehrlagig ausgebildet ist.

## Claims

1. Aircraft seat bracket and shell half having a fixing apparatus with at least one insertion region (14, 16) and at least one retaining member (22, 24), which are provided for fixing the shell half (10) to the bracket (12), **characterized in that** the insertion region (14, 16) comprises a recess (18, 20) which is provided for the purpose of enabling the retaining member (22, 24) to be inserted into the insertion region (14, 16) by means of an insertion motion which has a component perpendicular to a main direction of extent (26) of the retaining member (22, 24), wherein the shell half (10) comprises the insertion region (14, 16) with the recess (18, 20), and the bracket (12) comprises the retaining member (22, 24), the insertion region (14, 16) with the recess (18, 20) is being formed by a lug-like subregion (36, 38) protruding over the shell half (10) and the recess (18, 20) is being formed by an elongated hole (32, 34) with main directions of extent (26, 28, 30) in at least two different dimensions.

2. Aircraft seat bracket and shell half having a fixing apparatus according to Claim 1, **characterized in that** the elongated hole (32, 34) is provided with main directions of extent (26, 28, 30) in three different dimensions.

3. Aircraft seat bracket and shell half having a fixing apparatus according to Claim 1 or 2, **characterized in that** the lug-like subregion (36, 38) protrudes upwards.

4. Aircraft seat bracket and shell half having a fixing apparatus according to one of the preceding claims, **characterized in that** at least one insertion region (14, 16) has a guidance member (40, 42).

5. Aircraft seat bracket and shell half having a fixing apparatus according to Claim 4, **characterized in that** the guidance member (40, 42) is formed by an upwardly tapering recess.

6. Aircraft seat bracket and shell half having a fixing apparatus according to one of the preceding claims, **characterized by** at least one latching member (48, 50) for the latching of the retaining member (22, 24).

7. Aircraft seat bracket and shell half having a fixing apparatus according to one of the preceding claims, **characterized by** a recess (44, 46) which is provided for the purpose of securing the retaining member (22, 24) in the recess (44, 46) by means of a weight acting on the shell half (10).

8. Aircraft seat bracket and shell half having a fixing apparatus according to one of the preceding claims, **characterized in that** at least one strip (52) which comprises a recess (18, 20) is attached to the shell half (10).

9. Aircraft seat bracket and shell half having a fixing apparatus according to Claim 8, **characterized in that** the strip (52) comprises at least two recesses (18, 20), and the bracket (12) comprises at least two retaining members (22, 24).

10. Aircraft seat bracket and shell half having a fixing apparatus according to one of the preceding claims, **characterized in that** at least one insertion region (14, 16) is of multi-layered design.

## Revendications

1. Console et demi-coquille de siège d'avion avec un dispositif de fixation présentant au moins une zone d'introduction (14, 16) et au moins un élément de retenue (22, 24), qui sont prévus pour la fixation de la demi-coquille (10) à la console (12), **caractérisées en ce que** la zone d'introduction (14, 16) comprend un évidement (18, 20), qui est prévu pour permettre une introduction de l'élément de retenue (22, 24) dans la zone d'introduction (14, 16) avec un mouvement d'introduction, qui présente une composante perpendiculaire à une direction d'extension principale (26) de l'élément de retenue (22, 24), la demi-coquille (10) comprenant la zone d'introduction (14, 16) avec l'évidement (18, 20) et la console (12) comprenant l'élément de retenue (22, 24), la zone d'introduction (14, 16) avec l'évidement (18, 20) étant formée par une zone partielle (36, 38) en forme de patte saillante au-delà de la demi-coquille (10) et l'évidement (18, 20) étant formé par un trou oblong (32, 34) avec des directions d'extension principales (26, 28, 30) selon au moins deux dimensions différentes.

2. Console et demi-coquille de siège d'avion avec un dispositif de fixation selon la revendication 1, **caractérisées en ce que** le trou oblong (32, 34) est doté de directions d'extension principales (26, 28, 30) selon trois dimensions différentes.

3. Console et demi-coquille de siège d'avion avec un dispositif de fixation selon la revendication 1 ou 2, **caractérisées en ce que** la zone partielle en forme de patte (36, 38) est saillante vers le haut.

4. Console et demi-coquille de siège d'avion avec un dispositif de fixation selon l'une quelconque des revendications précédentes, **caractérisées en ce qu'**au moins une zone d'introduction (14, 16) présente un élément de guidage (40, 42).

5. Console et demi-coquille de siège d'avion avec un dispositif de fixation selon la revendication 4, **caractérisées en ce que** l'élément de guidage (40, 42) est formé par un évidement se rétrécissant vers le haut.

6. Console et demi-coquille de siège d'avion avec un dispositif de fixation selon l'une quelconque des revendications précédentes, **caractérisées par** au moins un élément d'encliquetage (48, 50) pour l'encliquetage de l'élément de retenue (22, 24).

7. Console et demi-coquille de siège d'avion avec un dispositif de fixation selon l'une quelconque des revendications précédentes, **caractérisées par** un évidement (44, 46), qui est prévu pour permettre une fixation de l'élément de retenue (22, 24) dans l'évidement (44, 46) au moyen d'une force pondérale agissant sur la demi-coquille (10).

8. Console et demi-coquille de siège d'avion avec un dispositif de fixation selon l'une quelconque des revendications précédentes, **caractérisées en ce qu'**au moins une latte (52), qui comporte un évidement (18, 20), est posée sur la demi-coquille (10).

9. Console et demi-coquille de siège d'avion avec un dispositif de fixation selon la revendication 8, **caractérisées en ce que** la latte (52) comporte au moins deux évidements (18, 20) et la console (12) comprend au moins deux éléments de retenue (22, 24).

10. Console et demi-coquille de siège d'avion avec un dispositif de fixation selon l'une quelconque des revendications précédentes, **caractérisées en ce qu'**au moins une zone d'introduction (14, 16) est réalisée en plusieurs couches.
